Europäisches Patentamt

European Patent Office

Office européen des brevets

(11) Veröffentlichungsnummer: **0 105 547**
**B1**

# EUROPÄISCHE PATENTSCHRIFT

(45) Veröffentlichungstag der Patentschrift:
24.09.86

(21) Anmeldenummer: 83201313.0

(22) Anmeldetag: 13.09.83

(51) Int. Cl.⁴: **B 01 D 53/34,** C 01 B 17/60,
**B 01 D 53/12**

(54) **Verfahren zur Abtrennung von Schadstoffen aus Abgasen.**

(30) Priorität: 25.09.82 DE 3235558

(43) Veröffentlichungstag der Anmeldung:
18.04.84 Patentblatt 84/16

(45) Bekanntmachung des Hinweises auf die Patenterteilung:
24.09.86 Patentblatt 86/39

(84) Benannte Vertragsstaaten:
AT BE CH DE FR GB IT LI LU NL SE

(56) Entgegenhaltungen:
EP-A-0 042 638
DE-A-3 009 366
DE-A-3 018 743
DE-A-3 041 997
GB-A-1 504 688
US-A-3 485 014

(73) Patentinhaber: **METALLGESELLSCHAFT AG,
Reuterweg 14 Postfach 3724, D-6000 Frankfurt/M.1
(DE)**

(72) Erfinder: **Sauer, Harald, Dr., Ziegenhainer Strasse
205, D-6000 Frankfurt am Main (DE)**
Erfinder: **Schmidt, Hans-Werner, Dr.,
Hasselhorstweg 9, D-6000 Frankfurt am Main (DE)**
Erfinder: **Fennemann, Wolfgang, Vilbeler Strasse
29, D-6367 Karben 6 (DE)**

(74) Vertreter: **Rieger, Harald, Dr., Reuterweg 14,
D-6000 Frankfurt a.M. (DE)**

## Beschreibung

Die Erfindung betrifft ein Verfahren zur Abtrennung von gasförmigen Schadstoffen aus Abgasen mit Hilfe von Feststoffen in einer aus Wirbelschichtreaktor, Abscheider und Rückführleitung gebildeten zirkulierenden Wirbelschicht, bei dem man das Abgas als Fluidisierungsgas in den Wirbelschichtreaktor einträgt.

Bei der Verbrennung fossiler Brennstoffe fallen Rauchgase an, die - je nach Schwefelgehalt der Ausgangsstoffe - beträchtliche Schwefeloxidgehalte, insbesondere Gehalte an Schwefeldioxid, aufweisen können. Auch die ständig steigende Zahl von Müllverbrennungsanlagen produziert Abgase, die neben Schwefeloxiden infolge der Verbrennung praktisch stets vorhandener Kunststoffe als weitere Verunreinigungen Chlorwasserstoff und Fluorwasserstoff enthalten. Die Umweltschutzbestimmungen verlangen, daß derartige Verunreinigungen aus den Gasen vor ihrer Ableitung in die Atmosphäre entfernt werden.

Die mit Abstand größte Zahl von Verfahren zur Abgasreinigung entfernt die vorgenannten Verunreinigungen durch Naßwäsche, wobei insbesondere Lösungen oder Aufschlämmungen von mit dem Schadstoffen reagierenden Substanzen eingesetzt werden (Ullmann's Enzyklopädie der Techn. Chemie, 3. Auflage, Band 2/2 (1965), Seite 419).

Weitere Verfahren arbeiten nach dem Prinzip der sogenannten trockenen Gaswäsche. Dabei werden die Gase durch eine ruhende Schüttung von mit den Verunreinigungen reagierenden Feststoffen, wie z.B. Aktivkohle oder Braunkohlenkoks, geleitet. Die Abgasreinigung kann auch mit Hilfe einer sogenannten Wanderschicht erfolgen, bei der der Feststoff während der Abwärtsbewegung im Reaktor zunehmend beladen und schließlich ausgetragen wird. Eine dem Austrag entsprechende Menge frischen Materials wird dabei dem Reaktor im oberen Bereich aufgegeben (Meier zu Kücker "Beurteilung und Aussichten von Verfahren zur Rauchgasentschwefelung" V.G.B. Kraftwerkstechnik 53 (1973), Seite 516 ff.).

Bei einem anderen bekannten Verfahren werden beispielsweise Schwefeloxide aus Gasen entfernt, indem man in diese pneumatisch Adsorbentien einträgt, die so erhaltene Gas/Feststoff-Dispersion pneumatisch durch eine Reaktionsstrecke und dann durch eine Verweilzone leitet und danach den Feststoff vom Gas trennt. Nach bestimmten Regeneriermaßnahmen wird letztlich ein Feststoffteilstrom Zur Gasreinigung zurückgeführt (US-A-3 485 014).

Schließlich ist eine Einrichtung zur trockenen Entfernung von Schadstoffen aus Rauchgasen bekannt, die in Abzugsrichtung hinter dem Verbrennungsbereich in einem Kesselbereich mit einer Rauchgastemperatur von 700 bis 900° C arbeitet. Sie weist ein den Rauchgasquerschnitt vollständig ausfüllendes Wirbelbett und/oder eine zirkulierende Wirbelschicht, die z.B. mit Calcium- und/oder Magnesiumcarbonat als Absorptionsmittel beaufschlagt ist, auf (DE-A-30 09 366). Dabei wird der Anströmboden des Wirbelbettes zweckmäßigerweise gekühlt.

Die wesentlichen Nachteile der Naßreinigungsverfahren sind, daß der anfallende Sulfite und Sulfate, gegebenenfalls auch Chloride und Fluoride enthaltende Schlamm nur schwierig deponierbar ist und daß die gereinigten Abgase erneut aufgeheizt werden müssen. Die bekannten Trockenreinigungsverfahren mit stationärem oder Wanderbett sind insofern mit Nachteilen behaftet, als wegen der Grobkörnigkeit der Absorbentien das Bindevermögen für die im Abgas enthaltenen Verunreinigungen nur sehr unvollkommen ausgenutzt wird und wegen der vergleichsweise geringen zulässigen Gasgeschwindigkeit sowie der großen zu reinigenden Gasmengen beträchtliche Reaktorabmessungen erforderlich sind.

Die wesentlichen Nachteile des Verfahrens gemäß US-A-3 485 014 liegen in dem Erfordernis, eine Aufteilung des zu reinigenden Gasstromes sowie eine präzise Dosierung des Absorptionsmittels in einer geeigneten, insbesondere verschleißfesten Vorrichtung vornehmen zu müssen. Nachteilig ist auch die für eine hinreichende Entfernung der Verunreinigungen ungenügend lange Verweilzeit der Gase in der Reaktionsstrecke oder aber die sonst erforderliche beträchtliche Bauhöhe.

Die Entfernung von Schadstoffen aus Rauchgasen von 700 bis 900° C gemäß DE-A-30 09 366 bereitet insofern Schwierigkeiten, als es besonderer Maßnahmen und Eingriffe in die Verbrennungsanlage bedarf, um die Temperatur der Rauchgase, die beim Austritt aus dem Brennraum üblicherweise heißer und beim Austritt aus dem Abhitzekessel üblicherweise kälter sind, auf einen Wert im Bereich von 700° bis 900 °C einzustellen.

Aus der EP - A - 42 638 ist ein Verfahren zur Heißentschwefelung von reduzierend wirkenden Brenn- oder Reduktionsgasen bekannt, bei dem man dieses Gas als Fluidisierungsgas in den Wirbelschichtreaktor einer zirkulierenden Wirbelschicht, die bei einer Temperatur von 700° bis 1100° C gehalten wird, einträgt. Das Entschwefelungsmittel besitzt eine Teilchengröße $d_p$ 50 von 30 bis 200, um und wird entsprechend einem stöchiometrischen Verhältnis von 1,2 bis 2,0 (berechnet als Ca:5), bezogen auf den Gehalt der Gase an Schwefelverbindungen, eingesetzt. Weiterhin werden im Wirbelschichtreaktor eine mittlere Suspensionsdichte von 0,1 bis 10 kg/m³, eine Gasgeschwindigkeit von 1 bis 10 m/sec sowie in der zirkulierenden Wirbelschicht eine Zirkulationsrate von mindestens dem 5-fachen des Reaktorinhalts eingestellt.

Dieses insbesondere auf die Entfernung von Schwefelwasserstoff abgestellte Verfahren hat zwar erhebliche Vorteile, indem trotz eines hohen erzielbaren Entschwefelungsgrades ein nur vergleichsweise geringer stöchiometrischer Überschuß an Entschwefelungsmittel erforderlich ist. Ein gewisser Nachteil ist jedoch, daß das Entschwefelungsmittel innerhalb eines vergleichsweise engen Körnungsbandes vorliegen muß bzw. daß äußerst feinkörnige Feststoffe wegen des dann nicht mehr gewährleisteten einwandfreien Wirbelzustandes nicht eingesetzt werden können.

Bei einem Spezialproblem, nämlich der Entfernung von Fluorwasserstoff aus Abgasen, insbesondere Abgasen der Aluminiumelektrolyse, ist es bekannt, die Fluorwasserstoff enthaltenden Gase als Fluidisierungsgas in einen Wirbelschichtreaktor zu leiten und dabei die Fluidisierungsgasgeschwindigkeit derart einzustellen, daß sich eine über den Wirbelschichtreaktor, einen nachgeschalteten Zyklonabscheider und eine Rückführleitung fließende zirkulierende Wirbelschicht ausbilden kann (DE-A-20 56 096). Als Feststoffe zur Ausbildung der zirkulierenden Wirbelschicht sind Aluminiumoxid und/oder Natriumaluminat erwähnt, die nach hinreichend hoher Beladung in die Schmelzflußelektrolyse zurückgeführt werden.

Das Wesen des vorgenannten Verfahrens besteht nicht nur in der Reinigung spezieller Abgase, sondern von seiner Zielsetzung her insbesondere auch darin, das im Abgas enthaltene Fluor in einer Form zu gewinnen, die es gestattet, es in die Schmelzflußelektrolyse zurückzuleiten und dadurch den Fluorbedarf zu reduzieren. Bei der Abgasreinigung hingegen ist eine Rückgewinnung von Schwefeloxiden bzw. anderen Schadstoffen in der Regel nicht beabsichtigt. Statt dessen wird das beladene Sorptionsmittel z.B. für Bauzwecke oder als Versatzmaterial genutzt ggf. auch verworfen.

Aufgabe der Erfindung ist es, ein Verfahren bereitzustellen, das die Nachteile der bekannten Gasreinigungsverfahren nicht aufweist, einfach in der Durchführung ist und sich billigster Absorptionsmittel bedienen kann.

Die Aufgabe wird gelöst, indem das Verfahren der eingangs genannten Art entsprechend der Erfindung derart ausgestaltet wird, daß man das Abgas in eine aus zwei Feststoffen unterschiedlicher Körnung gebildete Wirbelschicht einleitet, von denen der gröbere Feststoff eine Körnung von $d_p$ 50 im Bereich von 150 bis 500 μm und der feine, als Sorptionsmittel dienende Feststoff, bei dem Sand ausgenommen ist, eine Körnung von $d_p$ 50 unterhalb 10 μm aufweisen und wobei der Anteil an grobem Feststoff auf 70 bis 90 Gew.-% und an feinem Feststoff auf 10 bis 30 Gew.-% eingestellt ist.

Das erfindungswesentliche Merkmal des Einsatzes zweier Feststoffe mit unterschiedlicher Körnung bewirkt, daß die Verweilzeit des feinkörnigen Feststoffes, der sonst - ähnlich wie bei einer pneumatischen Förderung - unverzüglich mit entsprechend schlechteren Bedingungen hinsichtlich Wärme- und Stoffübertragung ausgetragen würde, innerhalb des Wirbelschichtreaktors beträchtlich erhöht wird. Darüber hinaus ist aufgrund des vergleichsweise groben Kornspektrums des Stützbettmaterials eine große Relativbewegung zwischen Grob- und Feinkorn zu erreichen. Hierdurch wird ein mechanischer Abrieb der bereits durch Sorption besetzten Oberfläche des Feinkorns erzielt und zur Sorption befähigte Oberfläche neu geschaffen.

Das bei der Erfindung angewendete Prinzip der expandierten Wirbelschicht zeichnet sich dadurch aus, daß - im Unterschied zur "klassischen" Wirbelschicht, bei der eine dichte Phase durch einen deutlichen Dichtesprung von dem darüber befindlichen Gasraum getrennt ist - Verteilungszustände ohne definierte Grenzschicht vorliegen. Ein Dichtesprung zwischen dichter Phase und dem darüber befindlichen Staubraum ist nicht vorhanden, statt dessen nimmt innerhalb des Reaktors die Feststoffkonzentration von unten nach oben ab.

Der ein Stützbett bildende gröbere Feststoff kann vorzugsweise aus Calciumoxid, Calciumhydroxid, Calciumcarbonat, Dolomit, Magnesiumoxid oder Magnesiumcarbonat, aber auch aus inerten Stoffen, wie z.B. aus Sand, bestehen. Dessen Fähigkeit zur sorptiven Bindung der Schadstoffe ist von untergeordneter Bedeutung.

Der feinkörnige Feststoff, der primär die Sorption der Schadstoffe zu bewirken hat, kann aus den vorgenannten Materialien, mit Ausnahme von Sand, bestehen. Bevorzugt angewendet wird Calciumhydroxid. Es können aber auch insoweit geeignete Abfallprodukte, wie z.B. der bei der Aluminiumoxidhydraterzeugung anfallende Rotschlamm, eingesetzt werden.

Der feinkörnige Feststoff kann dem Wirbelschichtreaktor sowohl in fester Form als auch in Form einer wäßrigen Suspension aufgegeben werden.

Eine bevorzugte Ausgestaltung der Erfindung besteht darin, den Wirbelzustand in der Wirbelschicht derart einzustellen, daß sich unter Verwendung der Definition über die Kennzahlen von Froude und Archimedes folgende Bereiche ergeben:

$$1 \leqslant 3/4 \cdot Fr^2 \cdot \frac{\rho_g}{\rho_k - \rho_g} \leqslant 20$$

bzw.

$$1 \leqslant Ar \leqslant 100$$

$$Ar = \frac{d_k^3 \cdot g \cdot (\zeta_k - \zeta_g)}{\zeta_g \cdot v^2}$$

und

$$F_r^2 = \frac{u^2}{g \cdot d_k}$$

sind.

Hierbei bedeuten:
u die relative Gasgeschwindigkeit in m/sec
Ar die Archimedeszahl
$F_r$ die Froude-Zahl
$\zeta_g$ die Dichte des Gases in kg/m
$\zeta_k$ die Dichte des Feststoffteilchens in kg/m$^3$
$d_k$ den Durchmesser des kugelförmigen Teilchens in m
v die kinematische Zähigkeit in m$^2$/sec
g die Gravitationskonstante in m/sec$^2$.

Hinsichtlich Durchsatzleistung von Abgas und Grad der Schadstoffentfernung infolge guter Feststoff/Gas-Vermischung ist es zweckmäßig, daß man die Gasgeschwindigkeit im Wirbelschichtreaktor auf 1 bis 10 m/sec (angegeben als Leerrohrgeschwindigkeit) einstellt.

Die im Wirbelschichtreaktor einzustellende mittlere Suspensionsdichte kann in weiten Grenzen, z.B. im Bereich von 0,1 bis 100 kg/m$^3$, variieren. Besonders vorteilhaft ist es jedoch, Suspensionsdichten im unteren Bereich zu wählen, da dann der Druckverlust beim Durchgang des Abgases durch das Wirbelbett besonders niedrig ist. Eine vorteilhafte Ausgestaltung der Erfindung sieht daher vor, die mittlere Suspensionsdichte im Wirbelschichtreaktor auf 0,2 bis 2 kg/m$^3$ einzustellen.

Um eine möglichst hohe Beladung des Sorptionsmittels mit den im Abgas enthaltenen Verunreinigungen sowie eine möglichst optimale Feststoff/Gas-Vermischung zu erzielen, sieht eine weitere vorteilhafte Ausgestaltung der Erfindung vor, die Menge des stündlich umlaufenden Feststoffes auf das 20- bis 150-fache der im Schacht des Wirbelschichtreaktors befindlichen Feststoffmenge einzustellen.

Die zirkulierende Wirbelschicht kann unter Verwendung eines Wirbelschichtreaktors, eines Zyklonabscheiders und einer in den unteren Bereich des Wirbelschichtreaktors mündenden Rückführleitung gebildet werden. Hierbei dient der Zyklonabscheider primär der Abtrennung des das Stützbett bildenden grobkörnigen Feststoffes. Für die Entfernung der Feinanteile wird der den Zyklonabscheider verlassende Gasstrom einer Feinreinigung, z.B. mittels eines Elektrofilters, unterworfen.

Eine besonders vorteilhafte Ausgestaltung der Erfindung besteht jedoch darin, die Abscheidung des mit den Gasen aus dem Wirbelschichtreaktor ausgetragenen Feststoffes in einem unmittelbar nachgeschalteten Elektrofilter vorzunehmen. Hierdurch wird der Druckverlust des Gases zusätzlich verringert.

Die weiterhin vorteilhafte Verwendung eines mehrfeldrigen Elektrofilters gibt zudem die Möglichkeit, die mit den Gasen ausgetragenen Feststoffe nach der Korngröße fraktioniert abzuscheiden und mindestens die im - in Richtung des Gasflusses gesehen - vorderen Feld erhaltene gröbere Feststofffraktion in die Wirbelschicht zurückzuführen. Der im - in Richtung des Gasflusses gesehen - hinteren Feld erhaltene Feststoff kann ausgeschleust werden.

Der der Abgasreinigung dienende Wirbelschichtreaktor kann von rechteckigem, quadratischem oder kreisförmigem Querschnitt sein. Als Gasverteiler kann ein Düsenrost vorgesehen werden. Insbesondere bei großen Reaktorquerschnitten und hohen Gasdurchsätzen ist es jedoch vorteilhaft, den unteren Bereich des Wirbelschichtreaktors konisch auszubilden und das Abgas durch eine venturiähnliche Düse einzutragen. Die letztgenannte Ausbildung ist wegen des besonders niedrigen Druckverlustes und der Unanfälligkeit gegenüber Verschmutzung und Verschleiß von Vorteil.

Der Eintrag der Feststoffe in den Wirbelschichtreaktor kann auf jede übliche Weise, z.B. durch pneumatische Rinnen, erfolgen. Sofern der feinkörnige Feststoff in Form einer wäßrigen Suspension zugeführt wird, sind als Eintragsorgane am zweckmäßigsten Lanzen vorzusehen. Infolge der bei zirkulierenden Wirbelschichten gegebenen guten Quervermischung reicht eine vergleichsweise geringe Zahl von Eintragsorganen.

Die Trockenreinigung kann bei weitgehend beliebigen Drücken, z.B. bis etwa 25 bar, vorgenommen werden. Ein Überdruck wird insbesondere dann vorzusehen sein, wenn das Abgas bereits unter Überdruck anfällt, beispielsweise weil der das Abgas liefernde Prozeß bereits unter Überdruck betrieben worden ist. Im allgemeinen wird man jedoch die Abgasreinigung bei einem Druck um ca. 1 bar vornehmen.

Die Temperatur der Abgase, die nach dem erfindungsgemäßen Verfahren gereinigt werden sollen, ist weitgehend beliebig, so daß sie praktisch mit der gleichen Temperatur, mit der sie anfallen, in den Wirbelschichtreaktor eingetragen werden können. Um für die Eintragsorgane in den Wirbelschichtreaktor auf hitzebeständigen Materialien oder spezielle Kühlsysteme für die Eintragsvorrichtung verzichten zu können, ist es zweckmäßig, nicht bei Temperaturen oberhalb 550 °C zu arbeiten.

Mit Hilfe des erfindungsgemäßen Verfahrens kann das gesamte anfallende Abgas, gegebenenfalls nur ein Teilstrom, gereinigt werden. Auch ist es möglich, das erfindungsgemäße Verfahren in Kombination mit Naßreinigungsverfahren durchzuführen. Diese Parallelschaltung hat den Vorteil, daß die bei Naßreinigungsverfahren praktisch unerläßliche Wiederaufheizung der gereinigten Gase zur Vermeidung einer Taupunktunterschreitung oder einer Kaminfahne unterbleiben kann.

Das erfindungsgemäße Verfahren ist universell anwendbar und insbesondere für die Reinigung von Rauchgasen aus Kraftwerks- oder Müllverbrennungsanlagen, von Abgasen der Sekundär-Aluminiumindustrie und von Abgasen der Glas- und Keramikindustrie geeignet. Mit dem erfindungsgemäßen Verfahren können auch Gase in Vergasungsprozessen gereinigt werden. Insbesondere können Schwefeloxide, Chlorwasserstoff, Fluorwasserstoff oder Verbindungen hiervon entfernt werden.

Die Vorteile des erfindungsgemäßen Verfahrens sind, daß es ohne oder nur unbedeutende Veränderung hinter bestehende Anlagen geschaltet werden kann, daß es im Bedarfsfall mit jeder anderen Form der Gasreinigung kombiniert werden kann, daß der Gasreinigung folgende Gasbehandlungen entfallen können und daß - auf die Einheit der Fläche des Wirbelschichtreaktors bezogen - sehr hohe Abgasdurchsätze möglich sind. Infolge der hohen in der zirkulierenden Wirbelschicht umlaufenden Sorptionsmittelmenge, die eine beträchtliche Pufferwirkung ausübt, ist das Verfahren geeignet, selbst bei starken Schwankungen im Schadstoffgehalt der Abgase, ohne großen regeltechnischen Aufwand eine sichere Gasreinigung herbeizuführen. Durch das Vorhandensein des Stützbettes wird bei Aufgabe des feinkörnigen, als Sorptionsmittel dienenden Feststoffes in Form einer Suspension zudem eine Verklebungs- oder Anbackungsgefahr vermieden. Das erfindungsgemäße Verfahren erlaubt eine nahezu vollständige Ausnutzung des als Sorptionsmittel dienenden feinkörnigen Feststoffes und führt zu gereinigten Gasen mit extrem günstigen Schadstoffenwerten.

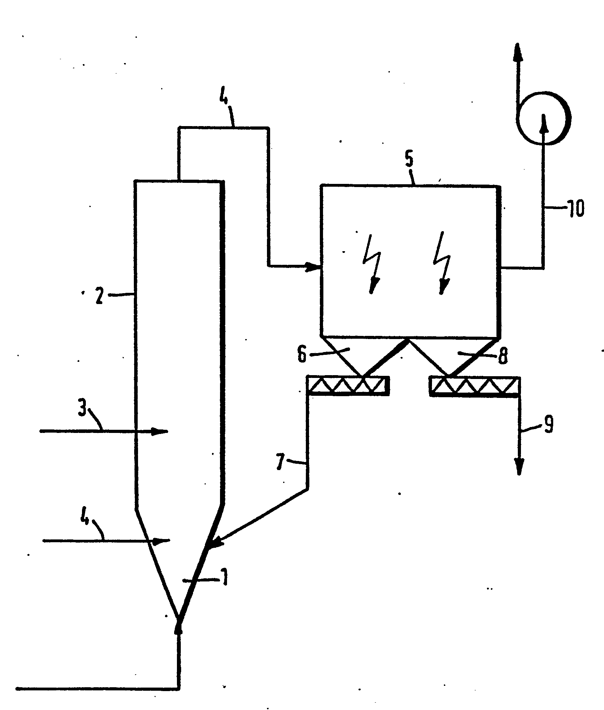

Die Erfindung wird anhand der Figur und des Beispiels näher und beispielsweise erläutert.

Die Figur zeigt eine schematische Darstellung der zirkulierenden Wirbelschicht.

Das zu reinigende Abgas wird über das konisch ausgebildete und mit einer Venturidüse versehene Unterteil 1 in den Wirbelschichtreaktor 2 eingetragen. Über Leitung 3 wird grobkörniger Feststoff als Stützbettmaterial und über Leitung 4 feinkörniger Feststoff als Sorptionsmittel zugeführt. Die gebildete Feststoff/Gas-Suspension verläßt den Wirbelschichtreaktor 2 über Leitung 4 und gelangt in das zweifeldrige Elektrofilter in dem der Feststoff abgeschieden wird. Die Grobfraktion sammelt sich im Staubbunker 6 und wird über Leitung 7 in den Wirbelschichtreaktor 2 zurückgeführt. Die im Staubbunker 8 anfallende Feinfraktion wird über Leitung 9 ausgetragen. Das gereinigte Rauchgas gelangt über Leitung 10 zum Kamin.

**Beispiel**

Zu reinigen war ein Abgas einer Müllverbrennungsanlage, das mit 220°C in einer Menge von 100 000 m³/h (im Normzustand) anfiel. Das Abgas enthielt (bezogen auf den Normzustand)

1,5 g/m³ HCl
1 " SO₂
0,025 " HF
3,5 " Asche.

Der zum Einsatz kommende Wirbelschichtreaktor hatte im zylindrischen Bereich einen Durchmesser von 3,5 m und eine Höhe von 14 m.

Das Abgas wurde über die venturimäßig ausgestaltete Vorrichtung 1 dem Wirbelschichtreaktor 2 zugeführt. Über Leitung 3 wurde Dolomit mit einer Körnung von $d_p$ 50 = 250 µm in einer Menge von 0,36 kg/h und über Leitung 4 Calciumhydroxid mit einer Körnung $d_p$ 50 = 8µm in einer Menge von 360 kg/h zudosiert.

Die Gasgeschwindigkeit im Wirbelschichtreaktor 2 betrug 5,5 m/sec, die mittlere Suspensionsdichte ca. 0,4 kg/m³.

Die am Kopf des Wirbelschichtreaktors 2 über Leitung 4 austretende Feststoff/Gas-Suspension, die eine Suspensionsdichte Von 400 g/m³ (im Normzustand) besaß, gelangte dann in das zweifeldrige Elektrofilter 5. Im Staubbunker 6 fielen stündlich 39,12 t Feststoff, die komplett über Leitung 7 in den unteren Bereich des Wirbelschichtreaktors 2 zurückgeführt wurden, an. Über den Staubbunker 8 erfolgte der Austrag von stündlich insgesamt 872 kg Feststoff. Dieser bestand aus einem Gemisch von Asche, die mit den Verbrennungsgasen der Müllverbrennungsanlage eingetragen worden waren, sowie insbesondere aus Calciumchlorid, Calciumfluorid, Calciumsulfat, Calciumsulfit sowie unumgesetztem Dolomit und unumgesetztem Calciumhydroxid.

Das über die Leitung 10 abgeführte Abgas enthielt - jeweils auf einen Normalkubikmeter bezogen

10 mg HCl
100 mg SO₂
0/3 mg F
10 mg Staub.-

**Patentansprüche**

1. Verfahren zur Abtrennung von gasförmigen Schadstoffen aus Abgasen mit Hilfe von Feststoffen in einer aus Wirbelschichtreaktor, Abscheider und Rückführleitung gebildeten zirkulierenden Wirbelschicht, bei dem man das Abgas als Fluidisierungsgas in den Wirbelschichtreaktor einträgt, <u>dadurch gekennzeichnet</u>, daß man das Abgas in eine aus zwei Feststoffen unterschiedlicher Körnung gebildete Wirbel schicht einleitet, von denen der gröbere Feststoff eine Körnung von $d_p$ 50 im

Bereich von 150 bis 500 µm und der feine, als Sorptionsmittel dienende Feststoff, bei dem Sand ausgenommen ist, eine Körnung von $d_p$ 50 unterhalb 10 µm aufweisen und wobei der Anteil an grobem Feststoff auf 70 bis 90 Gew.-% und an feinem Feststoff auf 10 bis 30 Gew.-% eingestellt ist.

2. Verfahren nach Anspruch 1, dadurch gekennzeichnet, daß man als groben Feststoff $CaO$, $CaCO_3$, $MgO$, $MgCO_3$, Dolomit und/oder Sand einsetzt.

3. Verfahren nach Anspruch 1 oder 2, dadurch gekennzeichnet, daß man als feinen Feststoff $Ca(OH)_2$ einsetzt.

4. Verfahren nach Anspruch 1, 2 oder 3, dadurch gekennzeichnet, daß man den Wirbelzustand im Wirbelschichtreaktor - über die Kennzahlen von Froude und Archimedes definiert - entsprechend

$$ 1 \leqslant 3/4 \cdot Fr^2 \cdot \frac{\rho_g}{\rho_k - \rho_g} \leqslant 20 $$

bzw.

$$ 1 \leqslant Ar \leqslant 100 $$

einstellt.

5. Verfahren nach einem oder mehreren der Ansprüche 1 bis 4 dadurch gekennzeichnet, daß man die Gasgeschwindigkeit im Wirbelschichtreaktor auf 1 bis 10 m/sec (angegeben als Leerrohrgeschwindigkeit) einstellt.

6. Verfahren nach einem oder mehreren der Ansprüche 1 bis 5, dadurch gekennzeichnet, daß man die mittlere Suspensionsdichte im Wirbelschichtreaktor auf 0,2 bis 2 kg/m³ einstellt.

7. Verfahren nach einem oder mehreren der Ansprüche 1 bis 6, dadurch gekennzeichnet, daß man die Menge des stündlich umlaufenden Feststoffes auf das 20- bis 150-fache der im Schacht des Wirbelschichtreaktors befindlichen Feststoffmenge einstellt.

8. Verfahren nach einem oder mehreren der Ansprüche 1 bis 7, dadurch gekennzeichnet, daß mam die mit den Gasen ausgetragenen Feststoffe in einem dem Wirbelschichtreaktor unmittelbar nachgeschalteten Elektrofilter abscheidet.

9. Verfahren nach Anspruch 8, dadurch gekennzeichnet, daß man die mit den Gasen ausgetragenen Feststoffe in einem mehrfeldrigen Elektrofilter nach Korngröße fraktioniert abscheidet und mindestens die im - im Richtung des Gasflusses gesehen - vorderen Feld erhaltenen gröberen Feststoffe in die Wirbelschicht zurückführt.

10. Verfahren nach Anspruch 9, dadurch gekennzeichnet, daß man im - in Richtung des Gasflusses gesehen - hinteren Feld erhaltene Feststoffe ausschleust.

**Claims**

1. A process of removing gaseous polluants from exhaust gases by means of solids in a circulating fluidized bed which is circulated through a fluidized bed reactor, a separator and a return line, wherein exhaust gas is introduced as fluidizing gas into the fluidized bed reactor, characterized in that the exhaust gas is introduced into a fluidized bed which is formed of two solid fractions which differ in particle size, namely, a coarse-grained fraction having solids of a particle size $d_p$ 50 in the range of 150 to 500 µm and a fine-grained fraction having solids of a particle size $d_p$ 50 below 10 µm and serving as sorbent with the exception of sand, the portion of the coarse-grained solids is adjusted to 70 to 90% by weight and the portion of fine-grained solids to 10 to 30% by weight.

2. A process according to claim 1, characterized in that $CaO$, $CaCO_3$, $MgO$, $MgCO_3$, dolomite and/or sand is used as coarse-grained solids.

3. A process according to claim 1 or 2, characterized in that $Ca(OH)_2$ is used as fine-grained solids.

4. A process according to claim 1, 2 or 3, characterized in that a fluidized state in the fluidized bed reactor, as defined by the Froude and Archimedes numbers, is adjusted according to:

$$ 1 \leqslant 3/4 \cdot Fr^2 \cdot \frac{\rho_g}{\rho_k - \rho_g} \leqslant $$

and

$$ 1 \leqslant Ar \leqslant 100. $$

5. A process according to any of claims 1 to 4, characterized in that a gas velocity of 1 to 10 m/sec (stated as the velocity in an empty pipe) is maintained in the fluidized bed reactor.

6. A process according to any of claims 1 to 5, characterized in that a mean suspension density of 0.2 to 2 kg/m³ is maintained in the fluidized bed reactor.

7. A process according to any of claims 1 to 6, characterized in that the quantity of solids circulated per hour is adjusted to 20 to 150 times the quantity of solids contained in the shaft of the fluidized bed reactor.

8. A process according to any of claims 1 to 7, characterized in that the solids entrained by the gases are removed in an electrostatic precipitatoi which directly succeeds the fluidized bed reactor

9. A process according to claim 8, characterized in that the solids entrained by the gas are collected in a multi-field electrostatic precipitator in separate particle size fractions anc at least the coarse-grained solids collected in the field which precedes in the gas flow path are returned to the fluidized bed reactor.

10. A process according to claim 9, characterized in that the solids collected in the succeeding field in the gas flow path are removed.

## Revendications

1. Procédé pour séparer des matières nocives gazeuses de gaz d'échappement à l'aide de matières solides dans un lit fluidisé circulant par un réacteur à lit fluidisé, un séparateur et une conduite de recyclage, procédé dans lequel on introduit le gaz d'échappement en tant que gaz de fluidisation dans le réacteur à lit fluidisé, caractérisé en ce qu'on introduit le gaz d'échappement dans un lit fluidisé formé par deux matières solides ayant des granulométries différentes dont la matière solide la plus grossière présente une granulométrie $d_p$ 50 dans la gamme de 150 à 500 μm et la matière solide fine servant comme agent de sorption, d'où le sable est exclu, une granulométrie de $d_p$ 50 inférieure à 10 μm et en ce que la proportion de matière solide grossière est réglée à 70 à 90 % en poids et celle de matière solide fine à 10 à 30 % en poids.

2. Procédé suivant la revendication 1 caractérisé en ce qu'on met en oeuvre, comme matière solide grossière, du CaO, du $CaCO_3$, du MgO, du $MgCO_3$ de la dolomie et/ou du sable.

3. Procédé suivant l'une des revendications 1 ou 2 caractérisé en ce qu'on met en oeuvre du $Ca(OH)_2$ comme matière solide fine.

4. Procédé suivant l'une des revendications 1, 2 ou 3 caractérisé en ce qu'on règle l'état de fluidisation dans le réacteur à lit fluidisé - défini suivant les nombres de froude et d'Archimède - suivant l'équation

$$1 \leq 3/4 \cdot F_r^2 \cdot \frac{\rho_g}{\rho_k - \rho_g} \leq 20$$

ou

$$1 \leq Ar \leq 100.$$

5. Procédé suivant une ou plusieurs des revendications 1 à 4 caractérisé en ce qu'on règle la vitesse du gaz dans le réacteur à lit fluidisé à 1 - 10 m/sec (exprimée en vitesse dans un tube vide).

6. Procédé suivant une ou plusieurs des revendications 1 à 5 caractérisé en ce qu'on règle la densité de suspension moyenne dans le réacteur à lit fluidisé à 0,2 à 2 kg/m³.

7. Procédé suivant une ou plusieurs des revendications 1 à 6 caractérisé en ce qu'on règle la quantité de matière solide circulant en une heure à une quantité égale à 20 à 150 fois la quantité de matière solide se trouvant dans la colonne du réacteur à lit fluidisé.

8. Procédé suivant une ou plusieurs des revendications 1 à 7 caractérisé en ce qu'on sépare les matières solides entraînées par les gaz dans un électrofiltre prévu immédiatement en aval du réacteur à lit fluidisé.

9. Procédé suivant la revendication 8 caractérisé en ce qu'on fractionne les matières solides entraînées par les gaz suivant la grosseur de leurs grains dans un électrofiltre à plusieurs compartiments et en ce qu'on renvoie dans le lit fluidisé au moins les matières solides les plus grossières obtenues dans le premier compartiment - considéré suivant la direction du flux de gaz.

10. Procédé suivant la revendication 9 caractérisé en ce qu'on soutire les matières solides fines obtenues dans le conpartiment ultérieur - considéré suivant la direction du flux du gaz.